Europäisches Patentamt

(19) European Patent Office

Office européen des brevets

(11) Numéro de publication: **0 072 712**
**B1**

(12) FASCICULE DE BREVET EUROPEEN

(45) Date de publication du fascicule du brevet:
**31.07.85**

(51) Int. Cl.⁴: **B 62 D 5/08, B 62 D 5/083**

(21) Numéro de dépôt: **82400187.9**

(22) Date de dépôt: **04.02.82**

(54) Distributeur rotatif hydraulique pour servomécanisme.

(30) Priorité: **11.08.81 FR 8115531**

(43) Date de publication de la demande:
**23.02.83 Bulletin 83/8**

(45) Mention de la délivrance du brevet:
**31.07.85 Bulletin 85/31**

(84) Etats contractants désignés:
**DE FR GB IT**

(56) Documents cités:
**EP - A - 0 053 559**
**DE - A - 2 845 301**
**FR - A - 2 445 255**
**FR - E - 88 627**
**GB - A - 1 535 722**
**GB - A - 2 062 560**

(73) Titulaire: **SOCIETE ANONYME D.B.A., Centre Paris
Pleyel, F-93521 St-Denis Cédex 01 (FR)**

(72) Inventeur: **Kervagoret, Gilbert, 5 Impasse Nobleterre,
F-95100 Argenteuil (FR)**

(74) Mandataire: **Poidatz, Emmanuel et al, Service Brevets
Bendix 44 rue François 1er, F-75008 Paris (FR)**

**Description**

L'invention concerne un distributeur rotatif de fluide hydraulique pour servomécanisme, notamment pour un système assistée d'un véhicule automobile, du type comprenant deux éléments de distributeur munis de parties cylindriques coaxiales, respectivement un élément de distributeur externe et un élément de distributeur interne monté à rotation dans un alésage axial de l'élément de distributeur externe et susceptible d'une rotation relative limitée par rapport à ce dernier, de part et d'autre d'une position relative neutre, les éléments de distributeur comportant des ouvertures et cavités définissant au moins un circuit de circulation de fluide connectable entre une source de fluide sous pression et un réservoir de fluide, le circuit comportant des passages à section variable définis dans les surfaces cylindriques de contact desdits éléments de distributeur, et étant matérialisé par des rainures longitudinales angulairement réparties à la surface externe de l'élément de distributeur interne, des paires de premières et secondes lumières opposées deux à deux formées dans l'élément de distributeur externe en regard, dans ladite position neutre, de portées lisses de l'élément de distributeur interne entre les bords adjacents de deux rainures voisines de ce dernier, les premières lumières communiquant avec un circuit d'amenée de fluide communiquant avec la source de fluide, et des perçages d'évacuation communiquant avec un chenal interne de raccordement au réservoir, formés dans l'élément de distributeur interne et débouchant sur les portées lisses correspondant aux secondes lumières.

Un tel distributeur est décrit notamment dans les documents DE-A-2 845 301, GB-A-1 535 722 et FR-A-2 445 255.

Dans les documents, de façon classique, les paires de lumières opposées formées dans la surface cylindrique interne de l'élément de distributeur externe et définissant, avec les rainures de l'élément de distributeur interne, les passages à section variable, sont également constituées par des rainures ou gorges longitudinales.

Or, si l'usinage de rainures longitudinales à la surface externe de l'élément de distributeur interne est relativement simple et d'une mise en œuvre pour coûteuse, il n'en est pas de même de rainures longitudinales pratiquées à la surface interne de l'élément de distributeur externe. C'est pourquoi on a proposé une nouvelle génération de distributeurs où les éléments du circuit de circulation de fluide définis dans l'élément de distributeur externe sont exclusivement constitués par des perçages radiaux. Un tel distributeur est par example décrit dans la demande de brevet européen EP-A-0 053 559 au nom de la demandresse.

Le distributeur conforme à la présente invention appartient à cette dernière catégorie.

La présente invention a pour objet de proposer des perfectionnements aux distributeurs rotatifs hydrauliques du type défini plus haut permettant une fabrication simplifiée aboutissant à un dispositif à la fois plus compact et moins coûteux, et permettant, sans surcoûts sensibles, de moduler les dimensions desdites lumières. Pour ce faire, selon l'invention, les premières et secondes lumières sont percées radialement dans l'élément de distributeur externe pour y former respectivement des paires opposées d'orifices traversants et d'évidements débouchant dans lesdit alésage axial.

Dans l'agencement défini ci-dessus, le fluide hydraulique en provenance de la source de fluide est introduit dans le distributeur par les orifices traversants précités, pénètre dans les rainures de l'élément de distributeur interne (lesquels communiquent avec des prises de pression reliées aux chambres d'un vérin d'assistance) et passe ensuite dans les évidements et les perçages d'évacuation pour retourner au réservoir.

L'invention sera mieux comprise et d'autres avantages de celle-ci apparaîtront mieux à la lumière de la description qui va suivre d'un mode de réalisation actuellement préféré d'un distributeur rotatif conforme à l'invention, donnée uniquement à titre d'example et faite en référence aux dessins non limitatifs annexés, dans lesquels:

— la figure 1 est une demi-coupe axiale d'un distributeur conforme à l'invention;

— la figure 2 est une coupe II-II de la figure 1 et

— la figure 3 est une vue analogue à la figure 2, représentant une variante d'exécution.

Le distributeur rotatif représenté comporte un élément de distributeur externe cylindrique 11 terminé par une portion d'engrenage 12 coopérant avec la crémaillière (non représentée) du système de direction d'un véhicule automobile et un élément de distributeur interne 13 dont une partie cylindrique est montée en rotation dans un alésage axial 14 de l'élément de distributeur externe. Ce dernier est lui-même monté en rotation dans un boîtier fixe 15 qui peut avantageusement être venu de matière avec le boîtier de la crémaillière précitée. Dans ce boîtier 15, l'élément de distributeur externe 11 est guidé en rotation par l'une de ses extrémités 16 au voisinage de la portion à engrenage 12 et dans sa partie médiane grâce à une bague 17 emmanchée à force dans le boîtier 15. Un joint annulaire d'étanchéité 18 marque la séparation entre le logement du distributeur proprement dit et celui de la crémaillière. Le positionnement axial de l'élément de distributeur interne 13 est assuré par un roulement à billes 19 intercalé entre sa surface externe et la surface interne du boîtier 15. Un joint d'étanchéité 20 renforcé par une coupelle annulaire 21 est également monté entre la surface interne du boîtier 15 et la surface externe de l'élément de distributeur 13 de sorte que la partie terminale 22 de ce dernier fait saillie au-delà de l'ouverture du boîtier 15. C'est cette partie terminale 22 qui est destinée à être reliée à la colonne de direction du véhicule. Une barre de torsion 23 est logée à l'intérieur d'une cavité axiale 24 de l'élément de distributeur interne 13. Cette barre de torsion est reliée par l'une de ses extrémités 25 à l'élément de distributeur externe 11 par l'intermédiaire d'une goupille 26 et par son autre extrémité 27 à l'élément de distributeur 13 par l'intermédiaire d'une goupille 28. L'état de repos de la barre de torsion 23 définit une position relative neutre entre les deux éléments de distributeur. Le boîtier 15 comporte un orifice de raccordement à une source de fluide 29, un orifice de raccordement à un réservoir de fluide 30 et deux orifices de raccordement à un vérin 31 et 32. L'orifice 29 communique avec une gorge annulaire 33 pratiquée à la surface externe de l'élément de distributeur 11 et les orifices de raccordement 31 et 32 communiquent respectivement avec des gorges annulaires 34 et 35 pratiquées de chaque côté de la gorge 33 à la surface externe de l'élément de distributeur 11. L'orifice de raccordement 30 communique avec la cavité axiale 24, par l'intermédiaire d'au moins un perçage radial 36 pratiqué dans l'élément de distributeur 11. Les orifices de raccordement 29, 30, 31 et 32 constituent les entrées et sorties d'un circuit de circulation de fluide constitué par des ouvertures et cavités définies dans les éléments de distributeur 11 et 13. Des joints annulaires 38 disposés à la surface externe de l'élément de distributeur 11 assurent une séparation étanche entre différentes parties de ce circuit.

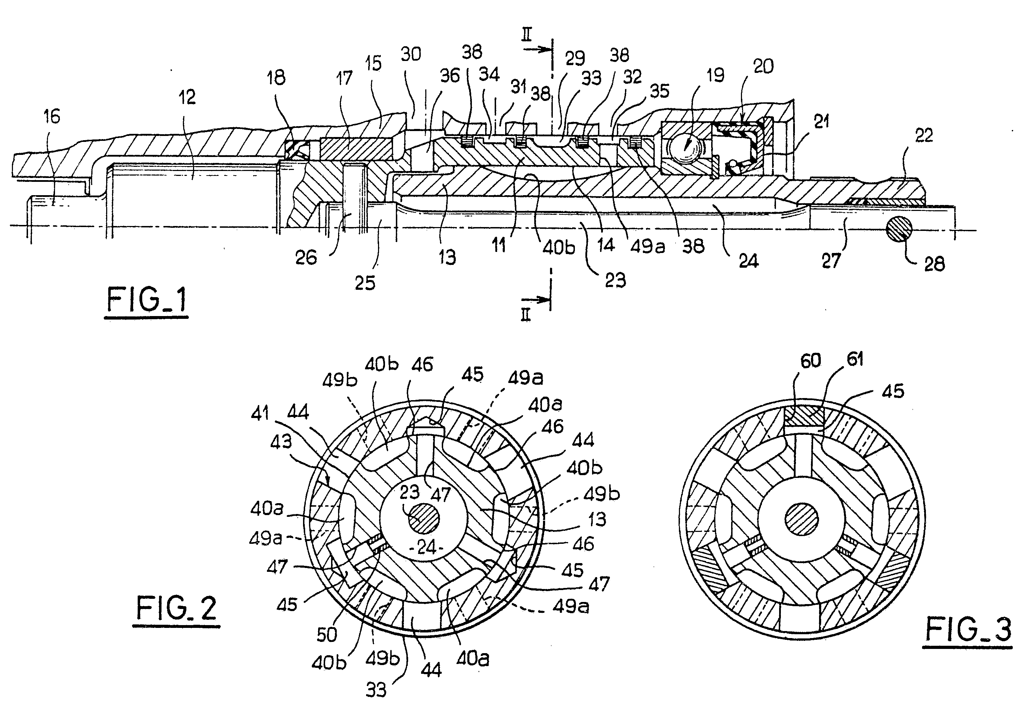

En se référant plus particulièrement à la figure 2, on voit que le circuit de circulation précité est matérialisé par:

— des rainures longitudinales 40, au nombre de six, connues en soit, réparties régulièrement à la surface externe de l'élément de distributeur interne 13;

— des perçages borgnes diamétraux 43, au nombre de trois, pratiqués à l'intervalles réguliers dans de distributeur externe 11 de façon à y définir, chacun, un orifice traversant 44 et un évidement 45 respectivement opposés et positionnés en regard de portées lisses 46 de l'élément de distributeur interne 13 entre les bords adjacents de deux rainures voisines 40 dans la position neutre représentée; et

— des perçages d'évacuation 47 communiquant avec un moyen de raccordement au réservoir précité et débouchant sur les portées lisses 46 qui correspondent aux évidements 45.

Comme cela ressort clairement de la figure 2, les perçages d'évacuation 47 débouchent simplement dans la cavité axiale 24 qui abrite la barre de torsion 23. Ils sont donc en communication avec l'orifice de raccordement 30.

Les perçages borgnes 43 sont tous dans un même plan et débouchent dans la gorge 33. Ils sont décalés de 120° les uns par rapport aux autres. Ainsi, chaque orifice traversant 44 est en communication avec la source de fluide tandis que tous évidements 45 sont en communication permanente, par l'intermédiaire des perçages d'évacuation 47 avec la cavité axiale 24, c'est-à-dire avec le réservoir de fluide. Par ailleurs, la moitié des rainures longitudinales 40a séparées les unes des autres de 120° communique par les trous 49a, pratiqués radialement dans l'élément de distributeur 11, avec l'orifice de raccordement 31 tandis que les autres rainures 40b intercalées entre les rainures 40a communquent par d'autres trous 49b, pratiqués dans l'élément de distributeur 11, avec l'orifice de raccordement 32. La coopération des arêtes des rainures 40 et des bords des orifices 44 et évidements 45 permet de définir les passages à section variable du distributeur dans les surfaces cylindriques de contact des éléments de distributeur 11 et 13.

Selon une autre caractéristique de l'invention, les perçages borgnes 43 ont des diamètres différents pour définir des passages à fermetures successives, en fonction de la rotation relative dans une sens donné d'un élément de distributeur par rapport à l'autre. En fait, il est surtout important que ce soient les évidements 45 définis par ces passages qui présentent des diamètres différents puisque c'est la fermeture des passages définis au voisinage de ces évidements qui conditionne la caractéristique du distributeur. Autrement dit les orifices 44 peuvent être réalisés à un diamètre supérieur après le forage des évidements 45.

Le fonctionnement est classique. Dans la position neutre représentée, le fluide introduit par les trois orifices 44, se répartit de façon égale entre les rainures 40a et 40b avant d'être évacué par la cavité axiale 24. Si l'utilisateur imprime une légère rotation à l'élément de distributeur interne 13, à l'encontre de la force de réaction exercée par la barre de torsion, le décalage angulaire se traduit par une restriction de la section de passage entre les rainures 40a (ou 40b) et les évidements 45. Il en découle une rapide montée en pression dans ces rainures, qui se communique à l'une des chambres du vérin d'assistance de l'installation de servodirection.

Si les conditions d'usinage ne permettent pas de réaliser les alésages borgnes avec une précision suffisante, on peut préférer le mode de réalisation de la figure 3 où les orifices 44 sont réalisés indépendamment des évidements 45. Ces derniers sont obtenus en pratiquent d'abord des alésages traversants rebouchés sur une partie de l'épaisseur de la paroi de l'élément de distributeur 11 par un insert métallique 61.

Bien entendu, l'invention n'est pas limitée au mode de réalisation qui vient d'être décrit. En particulier, il peut être intéressant que le perçage d'évacuation 47 correspondant à l'évidement 45 de plus grand diamètre constitue ou comporte une restriction d'écoulement anti-cavitation. L'utilité des restrictions d'écoulement anti-cavitation est décrite dans la demande antérieure de la demanderesse mentionnée plus haut. Sur la figure 2, cette restriction d'écoulement a été représentée comme étant une bague 50 montée à force dans le perçage d'évacuation 47 considéré.

## Revendications

1. Distributeur rotatif de fluide hydraulique pour servomécanisme, notamment pour système de direction assistée dans un véhicule automobile, comportant deux éléments de distributeur munis de parties cylindriques coaxiales, respectivement un élément de distributeur externe (11) et un élément de distributeur interne (13) monté à rotation dans un alésage axial (14) de l'élément de distributeur externe et susceptible d'une rotation relative limitée par rapport à ce dernier, de part et d'autre d'une position relative neutre, les éléments de distributeur comportant des ouvertures et cavités définissant au moins un circuit de circulation de fluide connectable entre une source de fluide sous pression et un réservoir de fluide, le circuit comportant des passages à section variable définis dans les surfaces cylindriques de contact desdits éléments de distributeur, et étant matérialisé par des rainures longitudinales (40a, 40B) angulairement réparties à la surface externe de l'élément de distributeur interne (13), des paires de premières (44) et secondes (45) lumières opposées deux à deux formées dans l'élément de distributeur externe (11) en regard, dans ladite position neutre, de portées lisses (46) de l'élément de distributeur interne entre les bords adjacents de deux rainures voisines de ce dernier, les premières lumières (44) communiquant avec un circuit d'amenée de fluide communiquant avec la source de fluide, et des perçages d'évacuation (47) communiquant avec un chenal interne (24) de raccordement au réservoir, formés dans l'élément de distributeur interne et débouchant sur les portées lisses correspondant aux secondes lumières (45), caractérisé en ce que le premières (44) et secondes (45) lumières sont percées radialement dans l'élément de distributeur externe (11) pour y former respectivement des paires opposées d'orifices traversants (44) et d'évidements (45) débouchant dans ledit alésage axial (14).

2. Distributeur rotatif selon la revendication 1, caractérisé en ce que lesdites paires d'orifices traversants (44) et d'évidements (45) sont constituées par des perçages borgnes (43) diamétraux pratiqués à intervalles réguliers dans l'élément de distributeur externe (11).

3. Distributeur rotatif selon la revendication 1, caractérisé en ce que les évidements (45) sont constitués par des perçages traversants (60) obturés extérieurement (61).

4. Distributeur rotatif selon l'une des revendications précédentes, dans lequel l'élément de distributeur interne (13) comporte une cavité axiale (24) communiquant avec un orifice de raccordement au réservoir et abritant une barre de torsion (23) reliée par ses extrémités auxdits éléments de distributeur, respectivement, caractérisé en ce que les perçages d'évacuation (47) débouchent radialement dans ladite cavité axiale (24).

5. Distributeur rotatif selon l'une des revendications précédentes, caractérisé en ce qu'au moins les évidements (45) précités ont des diamètres différents les uns des autres, pour définir des passages à fermetures successives en fonction de ladite rotation relative dans un sens donné.

6. Distributeur rotatif selon la revendication 5, caractérisé en ce qu'au moins le perçage d'évacuation (47) correspondant à l'évidement (45) de plus grand diamètre constitue ou comporte une restriction d'écoulement (50).

## Patentansprüche

1. Hydraulischer Rotationsverteiler für einen Servomechanismus, insbesondere für eine Servolenkeinrichtung in einem Kraftfahrzeug, mit zwei mit axialen zylindrischen Abschnitten versehenen Verteilerelementen, und zwar einem äußeren Verteilerelement (11) und einem inneren Verteilerelement (13), das in einer axialen Bohrung (14) des äußeren Verteilerelementes drehbar gelagert ist und bezüglich diesem beidseitig zu einer relativen Nullstellung eine begrenzte Relativdrehung ausführen kann, wobei die Verteilerelemente Öffnungen und Ausnehmungen aufweisen, die mindestens einen Strömungsmittelkreis bilden, der zwischen einer Druckmittelquelle und ein Strömungsmittelreservoir schaltbar ist, wobei der Strömungsmittelkreis Kanäle veränderlichen Querschnitts, die in den zylindrischen Berührungsflächen der Verteilerelemente gebildet sind, aufweist und von Längsnuten (40a, 40b), Paaren von ersten (44) und zweiten (45) Schlitzen und Ablaßbohrungen (47) gebildet wird, von denen die Längsnuten in Umfangsrichtung über der Außenfläche des inneren Verteilerelementes (13) verteilt sind, die Paare von ersten und zweiten Löchern paarweise gegenüberliegend in dem äußeren Verteilerelement (11) so gebildet sind, daß sie in der Nullstellung glatten Stegen (46) des inneren Verteilerelementes zwischen den angrenzenden Rändern zweier benachbarter Längsnuten desselben liegen, wobei die ersten Löcher (44) mit einem Strömungsmittelzuführkreis verbunden sind, der mit der Strömungsmitteldruckquelle verbunden ist, und von denen die Ablaßbohrungen (47) mit einem inneren Kanal (24) zum Anschluß am Reservoir in Verbindung stehen, in dem inneren Verteilerelement gebildet sind und an den Stegen entsprechend den zweiten Löchern (45) münden, dadurch gekennzeichnet, daß die ersten (44) und zweiten (45) Löcher radial in das äußere Verteilerelement (11) gebohrt sind, um dort zwei gegenüberliegende Paare von durchgehenden Öffnungen (44) und Hohlräumen (45) zu bilden, die in der axialen Bohrung (14) münden.

2. Rotationsverteiler nach Anspruch 1, dadurch gekennzeichnet, daß die Paare von durchgehenden Öffnungen (44) und Hohlräumen (45) von diametralen Bohrungen (43) gebildet werden, die mit gleichmäßigen Abständen in dem äußeren Verteilerelement (11) gebildet sind.

3. Rotationsverteiler nach Anspruch 1, dadurch gekennzeichnet, daß die Hohlräume (45) von durchgehenden Bohrungen (60) gebildet werden, die außen verschlossen (61) sind.

4. Rotationsverteiler nach einem der vorhergehenden Ansprüche, bei dem das innere Verteilerelement (13) eine axiale Ausnehmung (24) aufweist, die mit einer Öffnung zum Anschluß am Reservoir verbunden ist und eine Torsionsstange (23) umgibt, die an ihren Enden mit den Verteilerelementen verbunden ist, dadurch gekennzeichnet, daß die Ablaßbohrungen (47) radial in der axialen Ausnehmung (24) münden.

5. Rotationsverteiler nach einem der vorhergehenden Ansprüche, dadurch gekennzeichnet, daß mindestens die besagten Hohlräume (45) voneinander verschiedene Durchmesser haben, um Kanäle zu bilden, die in Abhängigkeit von der besagten Relativdrehung in einer bestimmten Richtung nacheinander verschließbar sind.

6. Rotationsverteiler nach Anspruch 5, dadurch gekennzeichnet, daß mindestens die Ablaßbohrung (47), die dem Hohlraum (45) mit größtem Durchmesser entspricht, eine Drosselstelle (50) bildet oder aufweist.

**Claims**

1. A rotary hydraulic distributor for a servo mechanism, in particular for a servo steering system in an automotive vehicle, comprising two distributor elements having coaxial cylindrical portions, i. e. an external distributor element (11) and an internal distributor element (13) rotatably mounted in an axial bore (14) of the external distributor element and adapted to perform a limited relative rotation with respect to the latter in opposite directions from a relative neutral position, the distributor elements comprising openings and cavities defining at least one fluid circuit connectable between a fluid pressure source and a fluid reservoir, the circuit comprising passages of variable section defined in the cylindrical contacting surfaces of said distributor elements and comprised of longitudinal grooves (40a, 40b) circumferentially spaced around the external surface of the internal distributor element (13), pairs of first (44) and second (45) recesses opposed two-by-two and formed in the external distributor element (11) to register in said neutral position with lands (46) of the internal distributor element between the adjacent edges of two adjacent grooves of the latter, the first recesses (44) communicating with a fluid feeding circuit communicating with the fluid source, and discharging bores (47) communicating with an internal channel (24) for connection to the reservoir, formed in the internal distributor element and opening on the lands corresponding to the second recesses (45), characterized in that the first (44) and second (45) recesses are radially bored into the external distributor element (11) in order to provide there opposite pairs of traversing orifices (44) and cavities (45) opening into said axial bore (14).

2. The rotary distributor of claim 1, characterized in that said pairs of traversing orifices (44) and cavities (45) are constituted by diametrical bores (43) provided at regular intervals in the external distributor element (11).

3. The rotary distributor of claim 1, characterized in that the cavities (45) are constituted by traversing bores (60) which are externally closed (61).

4. The rotary distributor of any of the preceding claims, wherein the internal distributor element (13) comprises an axial recess (24) communicating with an orifice for connection to the reservoir and enclosing a torsion rod (23) connected by its ends to said distributor elements, respectively, characterized in that the discharge bores (47) open radially into said axial recess (24).

5. The rotary distributor of any of the preceding claims, characterized in that at least the said cavities (45) have diameters differing from each other in order to define passages to be successively closed in response to said relative rotation in a predetermined sense.

6. The rotary distributor of claim 3, characterized in that at least the discharge bore (47) corresponding to the cavity (45) of greatest diameter constitutes or comprises a fluid restriction (50).

FIG_1

FIG_2

FIG_3

0 072 712